# EUROPEAN PATENT APPLICATION

(11) **EP 4 660 000 A1**
(43) Date of publication of application: **10.12.2025**
(21) Application number: 24777478.9
(22) Date of filing: 25.01.2024
(51) Int. Cl.: B60N 2/00

(54) **ELECTRIC LOCK HOOK MECHANISM FOR ADJUSTING BACKREST OF REAR SEAT**

(30) Priority: 27.03.2023 CN 202310302208; 27.03.2023 CN 202320614184 U
(71) Applicant: KEIPER Seating Mechanisms Co., Ltd., Shanghai 201314 (CN)
(72) Inventor: LI, Junwei, Suzhou, Jiangsu 215500 (CN); TANG, Liang, Suzhou, Jiangsu 215500 (CN); WANG, Zhengguang, Suzhou, Jiangsu 215500 (CN); SUN, Yafei, Suzhou, Jiangsu 215500 (CN); JIAO, Xingxing, Suzhou, Jiangsu 215500 (CN)
(74) Representative: Santarelli
(86) International application number: PCT/CN2024/073920
(87) International publication number: WO 2024/198683

(57) **Abstract**

The present invention discloses a rear seat backrest adjusting electric locking hook mechanism, comprising: a bracket, a screw rod, and a sliding connecting unit, wherein a chute is arranged on the bracket; the screw rod is mounted on the bracket; the screw rod is connected with a driving unit; the driving unit is capable of driving the screw rod to rotate; the middle of the sliding connecting unit penetrates through the chute in a sliding manner; both ends of the sliding connecting unit are connected with the screw rod and a locking hook of a rear seat backrest of a vehicle respectively; and the sliding connecting unit is capable of clamping the inner and outer sides of the chute with a clamping force adjustable. The present invention has the advantages of being flexible in spatial arrangement, stable in structure and high in strength.

## Description

### Technical Field

The present invention relates to the technical field of automobile seats, and in particular to a rear seat backrest adjusting electric locking hook mechanism.

### Background of the Invention

A rear seat backrest adjusting electric locking hook mechanism of a vehicle in the market at present is large in spatial occupation and low in strength. For example, the patent with the application No. CN 202222061959.9 discloses a seat backrest adjusting device and an automobile with same, comprising a mounting bracket, the mounting bracket is equipped with a sliding track area; a guide component, the guide component comprises a sliding block; the sliding block is connected with the sliding track area; an insert hole is formed in the sliding block; a driving component, the driving component is mounted on the mounting bracket; the driving component comprises a transmission part; an insert block is arranged on the transmission part; the insert block inserts into the insert hole; the driving component drives the transmission part to move; the transmission part drives the sliding block to slide along the sliding track area; and the sliding block drives a seat backrest to slide. Therefore, a rear seat backrest adjusting mechanism which solves disadvantages above needs to be created.

### Summary of the Invention

On the basis, for the technical problems above, a rear seat backrest adjusting electric locking hook mechanism is provided.

A rear seat backrest adjusting electric locking hook mechanism, including:
a bracket, a chute is arranged on the bracket;
a screw rod, mounted on the bracket, the screw rod is connected with a driving unit, and the driving unit is capable of driving the screw rod to rotate;
a sliding connecting unit, the middle of the sliding connecting unit penetrates through the chute in a sliding manner; both ends of the sliding connecting unit are connected with the screw rod and a locking hook of a rear seat backrest of a vehicle respectively; and the sliding connecting unit is capable of clamping the inner and outer sides of the chute with a clamping force adjustable.

In one embodiment, the sliding connecting unit includes:
a first sliding block, the lower part of the first sliding block is arranged on the screw rod in a sleeving manner and is in screw-thread fit with the screw rod; the upper part of the first sliding block is in contact with the inner side of the chute;
a second sliding block, fixedly connected with the locking hook; the second sliding block is in contact with the outer side of the chute;
a connecting screw, used for fixedly connecting the first sliding block and the second sliding block; and the connecting screw is capable of adjusting the distance between the first sliding block and the second sliding block.

In one embodiment, a bulge extending upwards is arranged in the middle of the top of the first sliding block; a groove is formed in the middle of the second sliding block; and the bulge is in fit with the groove.

In one embodiment, a rivet nut is arranged on the second sliding block; and the second sliding block is connected and fixed with the locking hook through the rivet nut.

In one embodiment, two mounting holes are symmetrically formed in the bracket; liner bushings are arranged in the mounting holes; and both ends of the screw rod are respectively correspondingly arranged in the liner bushings.

In one embodiment, a wear-resistant coating is arranged on the inner side of the liner bushing; and the liner bushing can be bent and flanged after being installed in place.

In one embodiment, the chute includes a chute body and a connecting rack; the chute body is formed in the connecting rack; a slot is formed in the bracket; and the connecting rack is mounted on the slot.

In one embodiment, the driving unit is a motor; and the motor is mounted on the bracket through a motor screw and a motor bush.

In one embodiment, the extending end of the screw rod away from the motor is connected with a nut through a washer.

According to the rear seat backrest adjusting electric locking hook mechanism, the middle of the sliding connecting unit penetrates through the chute in a sliding manner, both ends of the sliding connecting unit are connected with the screw rod and the locking hook of the rear seat backrest of the vehicle respectively, and then the locking hook and the screw rod can be arranged on the inner and outer sides of the bracket. When the distance between a mounting surface of a white vehicle body and the locking hook is small, the structure can still be arranged, and the position of the locking hook can exceed the range of bracket, having the advantages of flexible in spatial arrangement, stable in structure and high in strength.

### Brief Description of the Drawings

In order to describe the technical solutions in the examples of the present invention more clearly, a brief description of the accompanying drawings required for describing the examples will be provided below. Obviously, the accompanying drawings in the following description show merely some examples of the present invention. Those of ordinary skill in the art can also derive other accompanying drawings from these accompanying drawings without making creative efforts.
FIG. 1 is a structural schematic diagram of the foremost position of a rear seat backrest adjusting electric locking hook mechanism of the present invention;
FIG. 2 is a structural schematic diagram of the rearmost position of a rear seat backrest adjusting electric locking hook mechanism of the present invention;
FIG. 3 is an explosive view of a rear seat backrest adjusting electric locking hook mechanism of the present invention;
FIG. 4 is a structural schematic diagram of a sliding connecting unit of the present invention;
FIG. 5 is a schematic diagram of the mounting position of a chute on a bracket of the present invention;
FIG. 6 is a broken-out section view of a chute mounted on a bracket of the present invention;
FIG. 7 is a structural schematic diagram of a slot of the present invention;
FIG. 8 is a structural schematic diagram of a liner bushing of the present invention after bending and flanging;
FIG. 9 is a structural schematic diagram of connection of a locking hook of the present invention;
FIG. 10 is a structural schematic diagram of fixation of a motor of the present invention; and
FIG. 11 is a schematic diagram of the mounting position of a washer and a nut of the present invention.

### Detailed Description of Embodiments

To facilitate understanding of the present invention, a more comprehensive description of the invention will be provided below with reference to the relevant drawings. The preferred embodiments of the present invention are illustrated in the attached drawings. However, the present invention can be realized in different forms and is not limited to the embodiments described herein. On the contrary, the purpose of providing the embodiments is to make the understanding of the disclosed content of the present invention more thorough and comprehensive.

It should be noted that, when an element is referred to as being "fixed on" another element, it can be directly on the other element, or an intermediate element may present. When an element is considered to as being "connected to" another element, it can be directly connected to the other element, or intermediate elements may be present at the same time.

Unless otherwise stated, all technical and scientific terms used in the embodiments of the present invention have the same meaning as those commonly understood by those skilled in the technical field of the present invention. The terms used in the present invention are only for the purpose of describing the specific embodiments and are not intended to limit the scope of the present invention.

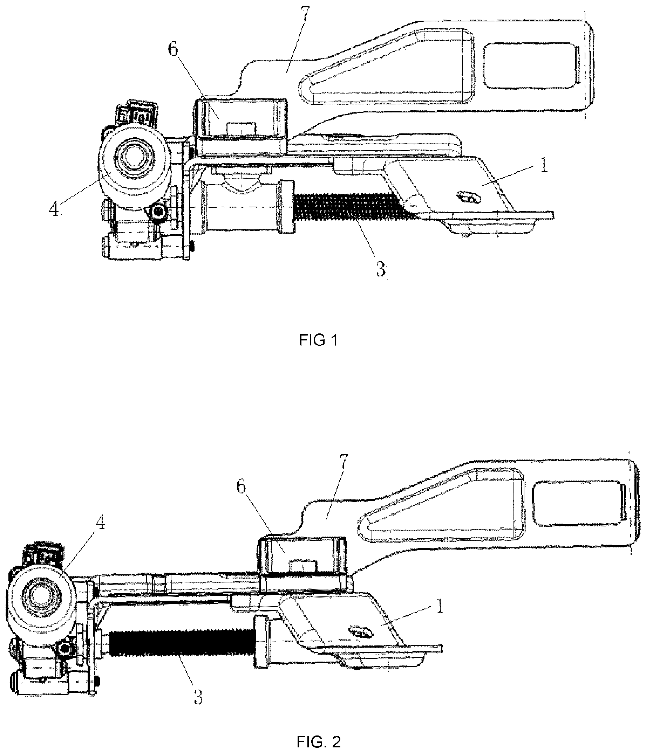

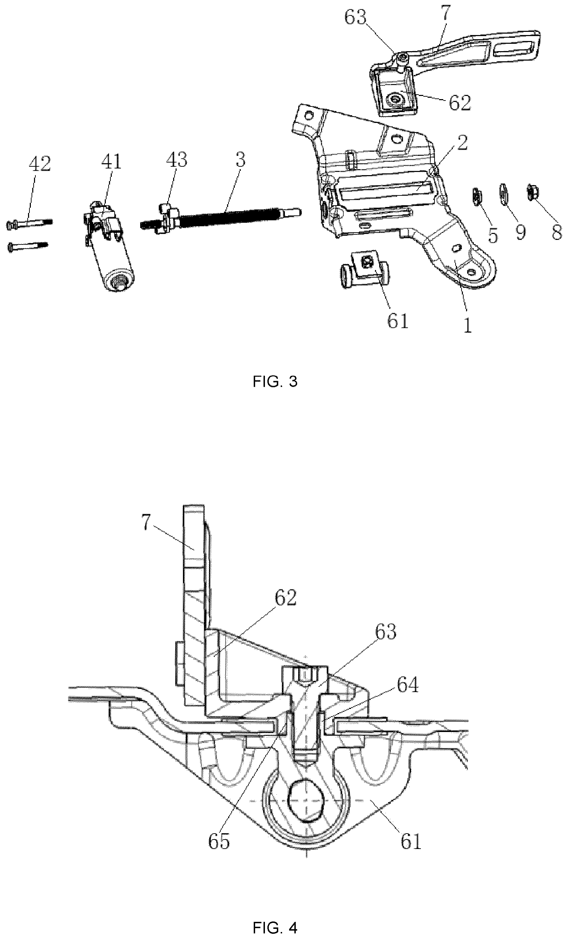

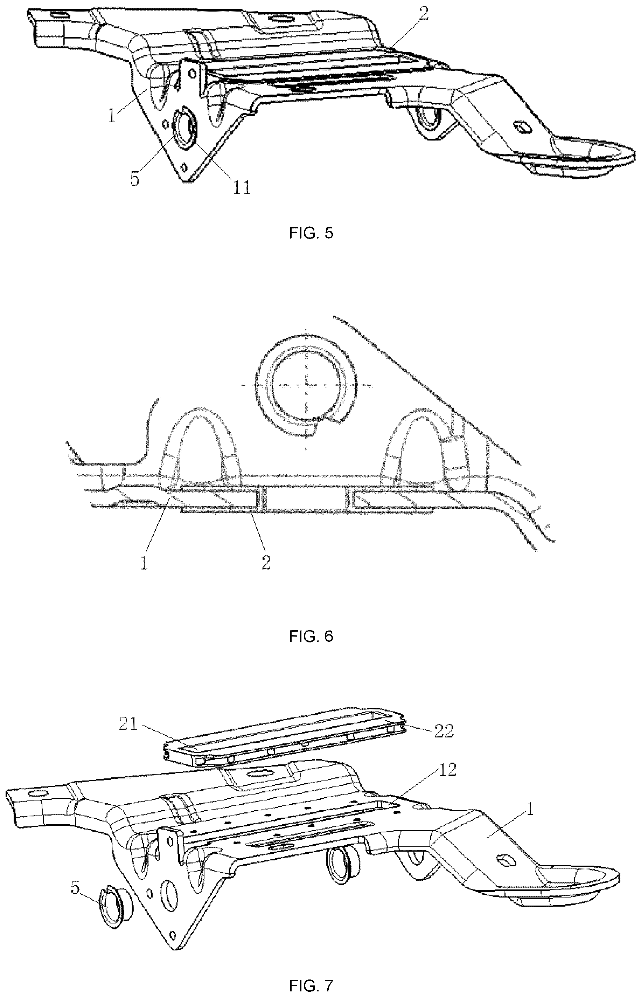

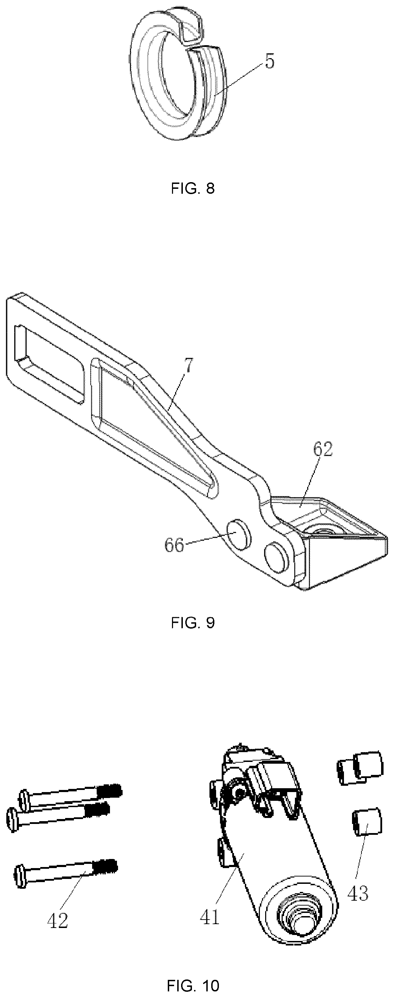

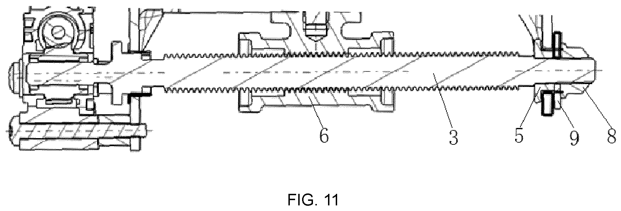

Referring to FIG. 1-11, an embodiment of the present invention provides a rear seat backrest adjusting electric locking hook mechanism, including:
a bracket 1, a chute 2 is arranged on the bracket 1;
a screw rod 3, mounted on the bracket 1, the screw rod 3 is connected with a driving unit 4, and the driving unit 4 is capable of driving the screw rod 3 to rotate;
a sliding connecting unit 6, the middle of the sliding connecting unit 6 penetrates through the chute 2 in a sliding manner; both ends of the sliding connecting unit 6 are connected with the screw rod 3 and a locking hook 7 of a rear seat backrest of a vehicle respectively; and the sliding connecting unit 6 is capable of clamping the inner and outer sides of the chute 2 with a clamping force adjustable.

According to the rear seat backrest adjusting electric locking hook mechanism, the middle of the sliding connecting unit 6 penetrates through the chute 2 in a sliding manner, both ends of the sliding connecting unit 6 are connected with the screw rod 3 and the locking hook 7 of the rear seat backrest of the vehicle respectively, and then the locking hook 7 and the screw rod 3 can be arranged on the inner and outer sides of the bracket 1. When the distance between the mounting surface of the white vehicle body and the locking hook 7 is small, the structure can still be arranged, and the position of the locking hook 7 can exceed the range of bracket 1, having the advantages of flexible in spatial arrangement, stable in structure and high in strength.

In one embodiment of the present invention, the sliding connecting unit 6 includes:
a first sliding block 61, the lower part of the first sliding block 61 is arranged on the screw rod 3 in a sleeving manner and is in screw-thread fit with the screw rod 3; the upper part of the first sliding block 61 is in contact with the inner side of the chute 2;
a second sliding block 62, fixedly connected with the locking hook 7; the second sliding block is in contact with the outer side of the chute 2;
a connecting screw 63, used for fixedly connecting the first sliding block 61 and the second sliding block 62; and the connecting screw 63 is capable of adjusting the distance between the first sliding block 61 and the second sliding block 62.

In the embodiment, the first sliding block 61 and the second sliding block 62 are respectively arranged on the inner and outer sides of the bracket 1. By rotating the connecting screw 63, the distance between the first sliding block 61 and the second sliding block 62 can be adjusted, then the compression degree of the first sliding block 61 and the second sliding block 62 to the inner and outer sides of the chute 2 can be controlled, in this way, an appropriate frictional damping force can be achieved, and then the sliding connecting unit 6 can move leftwards and rightwards smoothly.

In one embodiment of the present invention, a bulge 64 extending upwards is arranged in the middle of the top of the first sliding block 61; a groove 65 is formed in the middle of the second sliding block 62; and the bulge 64 is in fit with the groove 65. In the embodiment, both the bulge 64 and the groove 65 are in the chute 2. Due to such arrangement, the first sliding block 61 and the second sliding block 62 are mutually limited in position in the horizontal plane, and are prevented from mutual movement, thereby improving the structural stability.

In one embodiment of the present invention, a rivet nut 66 is arranged on the second sliding block 62; and the second sliding block 62 is connected and fixed with the locking hook 7 through the rivet nut 66. Therefore, the connecting strength of the second sliding block 62 with the locking hook 7 can be improved, and the locking hook 7 can be effectively prevented from dissociation.

Optionally, to enable the screw rod 3 to rotate smoothly and stably, two mounting holes 11 are symmetrically formed in the bracket 1; liner bushings 5 are arranged in the mounting holes 11; and both ends of the screw rod 3 are respectively correspondingly arranged in the liner bushings 5.

In one embodiment of the present invention, the wear-resistant coating is arranged on the inner side of the liner bushing 5, in this way, when the screw rod 3 rotates in the liner bushing 5, the wear-resistant coating plays a role of wear resisting, thus prolonging the service life of the screw rod 3 and the liner bushing 5. Optionally, the liner bushing 5 can be bent and flanged after installed in place. In this way, the liner bushing 5 can be fixed on the bracket 1 in a manner like anchoring, thereby effectively improving the fixing fastness of the liner bushing 5.

In one embodiment of the present invention, the chute 2 includes a chute body 21 and a connecting rack 22; the chute body 21 is formed in the connecting rack 22; a slot 12 is formed in the bracket 1; and the connecting rack 22 is mounted on the slot 12. In the embodiment, the chute 2 is mounted on the slot 12 of the bracket 1, and the first sliding block 61 and the second sliding block 62 can slide on the chute body 21 of the chute 2, thereby reducing wearing and noise.

In one embodiment of the present invention, the driving unit 4 is a motor 41; and the motor 41 is mounted on the bracket 1 through a motor screw 42 and a motor bush 43. Specifically, the motor bush 43 can be fixed on the bracket 1, and then the motor screw 42 penetrates through the motor 41 and is connected with the motor bush 43, thereby connecting and fixing the motor 41, being simple to fix and convenient to operate.

In one embodiment of the present invention, the extending end of the screw rod 3 away from the motor 41 is connected with a nut 8 through a washer 9. The nut 8 can be in abutment contact with the liner bushing 5, thereby limiting movement of the screw rod 3 in the axial direction.

The working process of the present invention is as follows:

The motor 41 drives the screw rod 3 to rotate, the screw rod 3 and the first sliding block 61 form a spiral transmission mechanism together, the screw rod 3 rotates to drive the first sliding block 61 to move, and the first sliding block 61 is fixedly connected with the second sliding block 62 and the locking hook 7 through connecting screws 63, to enable the locking hook 7 to move, thereby achieving stepless backrest adjustment after connected with a backrest. The first sliding block 61 can stop in any position on the screw rod 3, and is capable of achieving self locking through threads.

Various technical features of the above embodiments can be arbitrarily combined. For brevity of description, all possible combinations of various technical features in the above embodiments are not described. However, as long as there is no contradiction between the combinations of these technical features, they should all be considered as a scope recited in this specification.

The above embodiments merely represent implementations of the present invention, but should not be understood to limit the patent scope of the present invention. It should be noted that several variations and improvements may also be made without departing from the concept of the present invention to those of ordinary skill in the art, and these variations and improvements should all fall within the protection scope of the present invention. Therefore, the protection scope of the present invention shall be subject to the appended claims.

## Claims

1. A rear seat backrest adjusting electric locking hook mechanism, comprising:
a bracket, a chute is arranged on the bracket;
a screw rod, mounted on the bracket, the screw rod is connected with a driving unit, and the driving unit is capable of driving the screw rod to rotate;
a sliding connecting unit, the middle of the sliding connecting unit penetrates through the chute in a sliding manner; both ends of the sliding connecting unit are connected with the screw rod and a locking hook of a rear seat backrest of a vehicle respectively;
and the sliding connecting unit is capable of clamping the inner and outer sides of the chute with a clamping force adjustable.

2. The rear seat backrest adjusting electric locking hook mechanism according to claim 1, **characterized in that** the sliding connecting unit comprises:
a first sliding block, the lower part of the first sliding block is arranged on the screw rod in a sleeving manner and is in screw-thread fit with the screw rod; the upper part of the first sliding block is in contact with the inner side of the chute;
a second sliding block, fixedly connected with the locking hook; the second sliding block is in contact with the outer side of the chute;
a connecting screw, used for fixedly connecting the first sliding block and the second sliding block; and the connecting screw is capable of adjusting the distance between the first sliding block and the second sliding block.

3. The rear seat backrest adjusting electric locking hook mechanism according to claim 2, **characterized in that** a bulge extending upwards is arranged in the middle of the top of the first sliding block; a groove is formed in the middle of the second sliding block; and the bulge is in fit with the groove.

4. The rear seat backrest adjusting electric locking hook mechanism according to claim 3, **characterized in that** a rivet nut is arranged on the second sliding block; and the second sliding block is connected and fixed with the locking hook through the rivet nut.

5. The rear seat backrest adjusting electric locking hook mechanism according to claim 1, **characterized in that** two mounting holes are symmetrically formed in the bracket; liner bushings are arranged in the mounting holes; and both ends of the screw rod are respectively correspondingly arranged in the liner bushings.

6. The rear seat backrest adjusting electric locking hook mechanism according to claim 5, **characterized in that** a wear-resistant coating is arranged on the inner side of the liner bushing; and the liner bushing can be bent and flanged after being installed in place.

7. The rear seat backrest adjusting electric locking hook mechanism according to claim 1, **characterized in that** the chute comprises a chute body and a connecting rack; the chute body is formed in the connecting rack; a slot is formed in the bracket; and the connecting rack is mounted on the slot.

8. The rear seat backrest adjusting electric locking hook mechanism according to claim 1, **characterized in that** the driving unit is a motor; and the motor is mounted on the bracket through a motor screw and a motor bush.

9. The rear seat backrest adjusting electric locking hook mechanism according to claim 8, **characterized in that** the extending end of the screw rod away from the motor is connected with a nut through a washer.
